# DEMANDE DE BREVET EUROPEEN

(11) **EP 1 521 397 A2**
(43) Date de publication de la demande: **06.04.2005**
(21) Numéro de dépôt: 04292310.2
(22) Date de dépôt: 27.09.2004
(51) Int. Cl.: H04L 12/24, H04L 29/06

(54) **Localisation de points d'entree de flux dans un reseau de communications**

(30) Priorité: 30.09.2003 FR 0311410
(71) Demandeur: ALCATEL, 75008 Paris (FR)
(72) Inventeur: Delegue, Gérard, 94230 Cachan (FR); Martinot, Olivier, 91210 Draveil (FR); Betge-Brezetz, Stéphane, 75015 Paris (FR); Marilly, Emmanuel, 91240 Saint-Michel-Sur-Orge (FR)
(74) Mandataire: Chaffraix, Sylvain

(57) **Abrégé**

Un dispositif de détection de flux de données (DD), pour un équipement périphérique (RP) d'un réseau de communications muni d'un système de gestion de réseau, comprend des moyens de détection (MA) chargés de comparer des paramètres, qui sont contenus dans des entêtes de paquets de flux parvenant sur des interfaces d'entrée (IE) de l'équipement périphérique (RP), associées respectivement à des identifiants d'interface, à au moins un paramètre de configuration reçu du système de gestion de réseau. En cas d'identité entre un paramètre d'entête d'un paquet d'un flux reçu sur l'une des interfaces d'entrée (IE) et le paramètre de configuration, les moyens de détection (MA) génèrent, à destination du système de gestion de réseau, un message d'alarme comprenant l'identifiant de l'interface d'entrée (IE) qui a reçu le flux et l'identifiant du paramètre de configuration.

## Description

L'invention concerne le domaine des réseaux de communications, et plus précisément le contrôle de l'accès de flux de paquets de données à des réseaux de communications.

Comme le sait l'homme de l'art, l'opérateur d'un réseau de communications est fréquemment confronté à des situations dans lesquelles il doit savoir par quel équipement périphérique de réseau (ou point (ou noeud) d'entrée) un flux à pénétré dans son réseau.

C'est notamment le cas lorsqu'il s'agit d'améliorer l'ingénierie de trafic au sein d'un réseau. Il peut en effet arriver, par exemple, qu'un équipement de réseau, tel qu'un routeur, soit surchargé par des flux appartenant à une classe de service spécifique associée à une qualité de service (ou QoS) de type « or ». Dans cet exemple, l'opérateur doit déterminer l'origine des flux pour les rerouter et tenter de rétablir le plus vite possible la qualité du service qui est due aux clients concernés par ces flux.

Mais, c'est également le cas lorsque le réseau fait l'objet d'une attaque, par exemple par un virus. Dans ce cas, l'opérateur doit également déterminer l'origine des flux constituant l'attaque, afin de pouvoir les bloquer le plus rapidement possible au niveau de leur(s) point(s) d'entrée dans le réseau. Une telle opération est aujourd'hui très difficile à réaliser y compris lorsque l'on connaît des paramètres (ou caractéristiques) des flux d'attaque et que l'on dispose de la table de routage du réseau.

C'est encore le cas lorsque survient un problème dans un réseau, comme par exemple une congestion au niveau d'un noeud.

Dans les situations précitées, une fois que l'opérateur a déterminé chaque point d'entrée d'un flux, il doit déterminer l'interface d'entrée utilisée dans chacun desdits points d'entrée. Pour ce faire, l'opérateur doit déterminer les chemins empruntés par le flux en examinant saut après saut les traces qu'il a laissées dans les routeurs voisins. Or, si de telles traces n'existent pas, l'opérateur se trouve contraint d'installer des analyseurs de protocole entre les liens du réseau. Dans tous les cas, l'opérateur doit effectuer de nombreuses opérations manuellement, durant lesquelles les clients de son réseau sont privés de la qualité de service qui leur est due et/ou le réseau est laissé sans défense.

L'invention a donc pour but d'améliorer la situation.

Elle propose à cet effet un dispositif de détection de flux de paquets de données, pour un équipement périphérique d'un réseau de communications muni d'un système de gestion de réseau, comprenant des moyens de détection chargés de comparer les paramètres, contenus dans les entêtes des paquets des flux qui parviennent sur les interfaces d'entrée de l'équipement périphérique (associées respectivement à des identifiants d'interface), à au moins un paramètre de configuration reçu du (ou désigné par le) système de gestion de réseau et associé à un identifiant de paramètre. Ainsi, lorsqu'un paramètre d'entête d'un paquet, d'un flux reçu sur l'une des interfaces d'entrée de l'équipement périphérique, est identique au paramètre de configuration reçu (ou désigné), les moyens de détection génèrent à destination du système de gestion de réseau un message d'alarme comprenant l'identifiant de l'interface d'entrée qui a reçue ce flux et l'identifiant de paramètre.

Par ailleurs, les moyens de détection sont préférentiellement agencés de manière à cesser de comparer les contenus des champs d'entête à un paramètre de configuration choisi lorsqu'ils reçoivent du système de gestion de réseau un message requérant l'arrêt de cette comparaison.

Le paramètre de configuration peut être par exemple constitué d'une adresse source et d'une adresse destination, ou d'un identifiant de protocole, ou encore d'un identifiant DSCP.

Un tel dispositif de détection peut être installé dans un boîtier destiné à être raccordé à un équipement périphérique de réseau, tel qu'un routeur périphérique (ou « edge router »), ou bien il peut être directement intégré dans un équipement de réseau, tel qu'un routeur périphérique.

L'invention propose également un dispositif de gestion de localisation pour un système de gestion de réseau d'un réseau de communications comprenant des équipements périphériques munis d'interfaces d'entrée destinées à recevoir des flux de paquets de données et associées respectivement à des identifiants d'interface.

Ce dispositif de gestion se caractérise par le fait qu'il comprend des moyens de traitement chargés de générer, à destination de certains au moins des équipements périphériques du réseau, des messages de configuration comprenant au moins un paramètre de configuration et des instructions requérant la transmission, en cas de détection, de l'identifiant de l'interface d'entrée ayant reçu un flux comprenant un paquet dont l'entête comporte un paramètre identique au paramètre de configuration.

Le dispositif de gestion peut comprendre une interface graphique permettant notamment à un utilisateur de communiquer un paramètre de configuration à ses moyens de traitement, afin qu'ils puissent générer un message de configuration comportant ce paramètre de configuration.

En variante ou en complément, le dispositif de gestion peut comprendre des moyens d'extraction chargés, lorsqu'ils reçoivent une demande d'obtention d'un paramètre de configuration représentatif d'un flux reçu par un équipement de réseau désigné par un identifiant, d'accéder à la base d'informations de gestion (ou MIB pour « Management Information Base ») de cet équipement désigné, stockant certains paramètres contenus dans l'entête des paquets du flux reçu, de manière à extraire l'un au moins de ces paramètres puis à le transmettre aux moyens de traitement afin qu'ils puissent générer un message de configuration comportant ce paramètre de configuration.

Par ailleurs, lorsque le système de gestion de réseau comprend une mémoire (de topologie de réseau) stockant des identifiants d'équipements périphériques permettant l'accès des flux au réseau, les moyens de traitement peuvent être agencés, lorsqu'ils reçoivent un paramètre de configuration représentatif d'un flux choisi, pour accéder à cette mémoire de manière à déterminer les identifiants des équipements périphériques auxquels doivent être transmis les messages de configuration contenant le paramètre de configuration reçu, puis pour transmettre ces messages de configuration aux équipements périphériques concernés.

En variante, l'interface graphique peut être propre à permettre à un utilisateur de sélectionner parmi une liste d'équipements périphériques chaque équipement périphérique devant effectuer une détection, puis à communiquer chaque identifiant d'équipement périphérique sélectionné aux moyens de traitement en vue de la génération d'un message de configuration comportant ledit paramètre de configuration. Dans ce cas, l'interface graphique est préférentiellement couplée à une mémoire (de topologie de réseau) du système de gestion de réseau dans laquelle sont stockés les identifiants des équipements périphériques permettant l'accès des flux au réseau.

Le dispositif de gestion peut également comprendre des moyens de collection chargés, lorsqu'ils reçoivent un message d'alarme en provenance d'un équipement périphérique et comportant un identifiant d'interface d'entrée et un identifiant de paramètre de configuration, d'ordonner aux moyens de traitement de générer à destination de cet équipement périphérique un message requérant l'arrêt de la détection des flux contenant le paramètre de configuration reçu. Dans ce cas, le dispositif de gestion peut également comprendre des moyens de temporisation chargés, chaque fois que les moyens de traitement reçoivent une demande de génération d'un message d'arrêt, d'initier le décompte d'une durée choisie, puis en fin de décompte d'autoriser les moyens de traitement à transmettre ce message d'arrêt à destination de l'équipement périphérique concerné.

L'invention propose en outre un procédé de gestion de localisation pour un réseau de communications, consistant :
- à déterminer au moins un paramètre de configuration représentatif d'un flux à détecter et associé à un identifiant de paramètre,
- à configurer des équipements périphériques choisis du réseau afin qu'ils comparent des paramètres, contenus dans des entêtes de paquets de flux parvenant sur leurs interfaces d'entrée, au paramètre de configuration déterminé, et qu'en cas d'identité entre un paramètre d'entête d'un paquet d'un flux reçu sur l'une de leurs interfaces d'entrée et ce paramètre de configuration, ils génèrent à destination d'un système de gestion du réseau un message d'alarme, comprenant l'identifiant de l'interface d'entrée ayant reçu le flux et l'identifiant de paramètre, et
- en cas de réception d'un message d'alarme provenant d'un équipement périphérique et comportant un identifiant d'interface d'entrée et un identifiant de paramètre de configuration, à transmettre aux équipements périphériques concernés un message requérant l'arrêt de la détection des flux comportant le paramètre de configuration.

D'autres caractéristiques et avantages de l'invention apparaîtront à l'examen de la description détaillée ci-après, et des dessins annexés, sur lesquels:
- la figure 1 illustre de façon schématique un réseau de communications comprenant un système de gestion de réseau (NMS) équipé d'un premier exemple de réalisation d'un dispositif de gestion de localisation selon l'invention et des équipements de réseau équipés, au moins pour certains, d'un dispositif de détection selon l'invention,
- la figure 2 illustre de façon schématique un équipement de réseau muni d'un exemple de réalisation de dispositif de détection selon l'invention, et
- la figure 3 illustre de façon schématique un second exemple de réalisation d'un dispositif de gestion de localisation selon l'invention.

Les dessins annexés pourront non seulement servir à compléter l'invention, mais aussi contribuer à sa définition, le cas échéant.

L'invention a pour objet de permettre la détection de points d'entrée de flux de paquets de données dans des réseaux de communications gérés. On entend ici par « réseau géré » un réseau comprenant un système de gestion de réseau ou NMS (pour « Network Management System »).

On considère dans ce qui suit, à titre d'exemple illustratif, que le réseau de communications est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique ou mobile, ou encore aux réseaux mixtes voix-données tels que les réseaux de type NGN. Elle s'applique également à la couche transport, et notamment aux flux TCP et UDP, ainsi qu'au protocole ICMP.

On entend ici par « réseau IP» un contexte multidomaines constitué d'une somme de domaines et/ou de sous-domaines IP raccordés les uns aux autres.

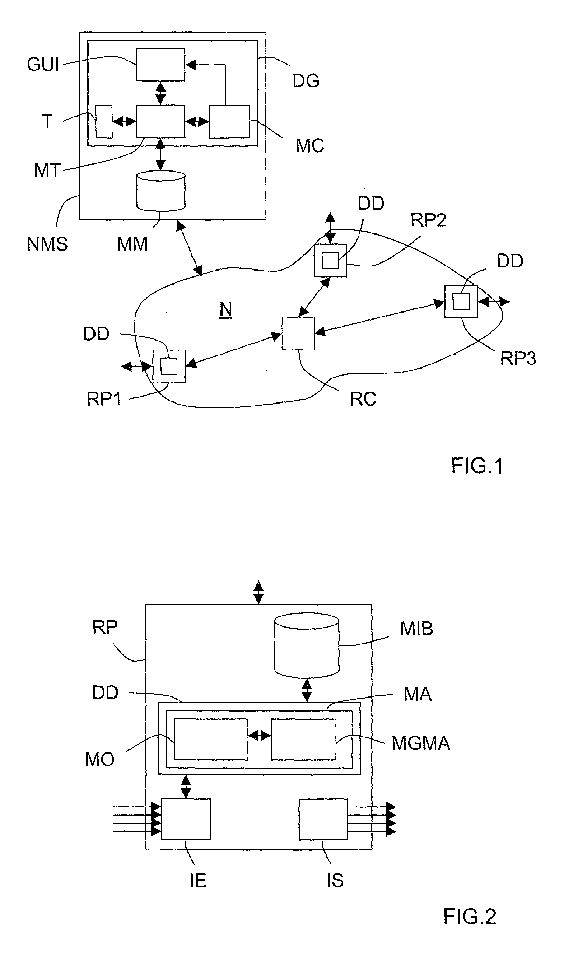

Comme cela est très schématiquement illustré sur la figure 1, un réseau internet N peut être assimilé à un noyau, comportant un ensemble d'équipements de réseau (ou noeuds) RPi et RC, raccordés entre eux de manière à assurer le routage de paquets de données qu'ils reçoivent, et à un ensemble de terminaux de communication (non représentés), raccordés à certains équipements de réseau (ou noeuds) RPi, éventuellement via un ou plusieurs autres terminaux de type serveur d'accès, de manière à échanger entre eux des paquets de données.

On entend ici par « terminal de communication » tout équipement de réseau capable d'échanger des paquets de données, comme par exemple un ordinateur portable ou fixe, un téléphone fixe ou mobile, un assistant personnel numérique (ou PDA pour « Personal Digital Assistant »), ou un serveur.

Les équipements de réseau (ou noeuds) sont généralement des routeurs périphériques (ou « edge routers ») RPi (ici i = 1 à 3, mais il peut prendre n'importe quelle valeur supérieure ou égale à deux), et des routeurs de coeur (ou « core routers »). On n'a représenté ici qu'un unique routeur de coeur RC, mais il peut y en avoir plusieurs.

Habituellement, les terminaux de communication sont chacun raccordés à l'un des routeurs périphériques RPi, qui leur sert de noeud d'accès au réseau internet N, et les routeurs périphériques RPi sont généralement reliés entre eux par l'intermédiaire d'un ou plusieurs routeurs de coeur RC.

Par ailleurs, dans un réseau IP traditionnel chaque domaine ou sous-domaine possède ses propres routeurs périphériques RPi et ses propres routeurs de coeur RC. Dans un réseau de type IP/MPLS, les équipements de réseau sont appelés « Label Switch Routers » et se présentent soit sous la forme de routeurs, soit sous la forme de commutateurs ATM contrôlés par une fonction de routage.

Le réseau N comporte également un système de gestion de réseau ou NMS (pour « Network Management System ») couplé, notamment, à ses équipements de réseau RPi et RC. Ce système de gestion de réseau NMS, également appelé système d'exploitation du réseau, permet notamment au gestionnaire (ou superviseur) du réseau de gérer les équipements de réseau RPi et RC qui le constituent.

A cet effet, les équipements de réseau RPi et RC sont agencés de manière à pouvoir échanger des données selon un protocole de gestion de réseau avec le système de gestion NMS, comme par exemple le protocole SNMP (pour « Simple Network Management Protocol » RFC 2571-2580). Bien entendu, d'autres protocoles de gestion de réseau peuvent être utilisés, et notamment CLI, TL1, CORBA ou CMISE/CMIP.

Comme indiqué dans la partie d'introduction, un opérateur doit, dans de nombreuses situations, pouvoir déterminer non seulement chaque noeud d'entrée RP par lequel un flux particulier est entré dans son réseau N, mais également l'interface d'entrée de ce noeud d'entrée. L'invention est destinée à permettre une telle détermination.

Elle propose à cet effet, d'une part, un dispositif de gestion de localisation DG, illustré sur la figure 1 et implanté dans le système de gestion NMS d'un réseau N, et des dispositifs de détection DD illustrés sur la figure 2 et implantés dans (ou raccordés à) des équipements périphériques RPi du réseau N.

Un dispositif de détection DD, selon l'invention, est destiné à observer les flux reçus par un équipement périphérique, tel qu'un routeur périphérique RPi, afin de détecter ceux qui comportent des paquets dont l'entête comprend au moins un paramètre de configuration choisi.

Dans ce qui suit, on considère à titre d'exemple illustratif que les dispositifs de détection DD sont implantés dans des routeurs périphériques RPi. Mais, en variante, ils pourraient comprendre un boîtier destiné à être couplé à un équipement périphérique RPi.

Comme illustré sur la figure 2, un dispositif de détection DD comprend plus précisément un module de détection MA comportant préférentiellement un module d'observation MO et un module de génération de messages d'alarme MGMA.

Le module d'observation (ou de filtrage) MO est couplé aux interfaces d'entrée IE de son routeur périphérique RP, lesquelles sont respectivement associées à des identifiants d'interface qui permettent de les différencier les unes des autres. Il est chargé d'observer les flux que son routeur périphérique RP reçoit sur ses interfaces IE afin de comparer les paramètres (ou caractéristiques), qui sont contenus dans les entêtes des paquets des flux reçus, à au moins un paramètre de configuration reçu ou désigné par son identifiant (de paramètre).

Comme on le verra plus loin, le paramètre de configuration ou l'identifiant de paramètre de configuration est transmis aux routeurs périphériques concernés par le système de gestion de réseau NMS et plus précisément par son dispositif de gestion de localisation DG.

Le paramètre de configuration peut être constitué d'une adresse source et d'une adresse destination, ou bien d'un identifiant de protocole, ou encore d'un identifiant DSCP, par exemple. Mais, il peut également être constitué d'un entête TCP ou UDP, ou bien d'un identifiant de type de message dans le cas du protocole ICMP.

Chaque paquet, d'un flux parvenant sur une interface d'entrée IE d'un routeur périphérique RPi, fait donc l'objet d'une analyse des paramètres qui sont contenus dans ses champs d'entête. Et, lorsque l'un des paramètres d'entête d'un paquet d'un flux reçu est identique au paramètre de configuration, objet de la comparaison, le module d'observation MO avertit le module de génération de messages d'alarme MGMA. Ce dernier génère alors, à destination du système de gestion de réseau NMS, et plus précisément à destination du dispositif de gestion de localisation DG, un message d'alarme comprenant l'identifiant de l'interface d'entrée IE qui a reçue ce flux et l'identifiant du paramètre de configuration concerné.

Comme indiqué ci-avant, les paramètres de configuration (ou identifiants de paramètre de configuration) sont transmis aux modules de détection MA des dispositifs de détection DD par le dispositif de gestion de localisation DG, via le réseau N et à l'aide de commandes adaptées au(x) protocole(s) de gestion de leurs routeurs périphériques RPi respectifs (par exemple SNMP ou CLI).

Le dispositif de gestion de localisation DG comporte à cet effet, tout d'abord, un module de traitement MT (également appelé module de configuration) chargé de générer des messages de configuration à destination de certains au moins des routeurs périphériques RPi du réseau N.

Chaque message de configuration comprend au moins un paramètre de configuration (ou son identifiant) et des instructions requérant d'un module de détection MA qu'il se configure de manière, d'une part, à filtrer (ou comparer) les contenus des entêtes des paquets des flux reçus par son routeur périphérique RPi, et d'autre part, à transmettre l'identifiant de l'interface d'entrée IE qui a reçue un flux comprenant un paquet dont l'entête comporte un paramètre identique au paramètre de configuration contenu (ou identifié) dans le message de configuration.

Un message de configuration constitue ainsi, en quelque sorte, un filtre de flux qu'un dispositif de détection DD doit utiliser.

Il est important de noter qu'un même message (ou filtre) de configuration peut comporter plusieurs paramètres de configuration (ou identifiants de paramètre de configuration) qui doivent être appliqués (ou utilisés) conjointement. Par ailleurs, un même dispositif de détection DD peut être agencé de manière à utiliser plusieurs filtres en parallèle, afin de surveiller des flux présentant des caractéristiques (ou paramètres) différent(e)s.

Les paramètres de configuration (ou leurs identifiants) peuvent être fournis au module de traitement MT d'au moins deux façons.

Une première façon, illustrée notamment sur la figure 1, consiste à munir le dispositif de gestion de localisation DG d'une interface graphique utilisateur, de type GUI (pour « Graphical User Interface »). Une telle interface GUI permet en effet à un utilisateur (tel qu'un administrateur de réseau) de communiquer un ou plusieurs paramètres de configuration au module de traitement MT.

Elle peut également, et éventuellement, permettre à l'administrateur de sélectionner dans une liste de routeurs périphériques RPi ceux à qui le dispositif de gestion de localisation DG doit transmettre les messages de configuration contenant un paramètre de configuration (ou son identifiant) saisi (ou communiqué). Dans ce cas, le dispositif de gestion de localisation DG est couplé à une mémoire MM comprenant la définition de la topologie du réseau N. Cette mémoire MM fait généralement partie du système de gestion NMS, de sorte qu'il suffit de la coupler au module de gestion de localisation DG pour qu'il puisse utiliser une partie au moins de son contenu.

Bien entendu, il n'est pas obligatoire que l'administrateur sélectionne tout seul les routeurs périphériques qui doivent effectuer une détection. Il peut par exemple être assisté dans cette tâche par le module de traitement MT. Dans ce cas, le module de traitement MT peut par exemple proposer une liste de routeurs à l'opérateur qui peut alors valider ou refuser cette liste. A cet effet, le module de traitement MT doit être couplé à la mémoire MM.

Par ailleurs, la tâche peut même être omise lorsque l'on décide d'adresser systématiquement à tous les routeurs périphériques RPi du réseau N chaque message de configuration.

Une fois en possession du paramètre de configuration, représentatif (ou caractéristique) du flux à détecter, et des identifiants des routeurs périphériques RPi devant effectuer la détection, le module de traitement MT n'a plus qu'à générer son message de configuration puis à le faire transmettre par le système de gestion de réseau NMS auxdits routeurs.

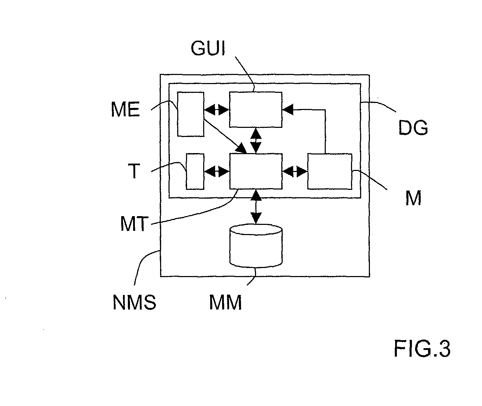

Une seconde façon, illustrée sur la figure 3, consiste à munir le dispositif de gestion de localisation DG d'un module d'extraction de paramètre(s) ME, couplé au moins au module de traitement MT.

Un tel module d'extraction ME est chargé, lorsqu'il reçoit une demande d'obtention d'un paramètre de configuration représentatif d'un flux qui a été reçu par un équipement de réseau RPi ou RC, désigné par son identifiant de réseau, d'accéder à sa base d'informations de gestion (ou MIB pour « Management Information Base »), ou bien de s'y connecter (par un « log »), afin de déterminer l'un au moins des paramètres du flux reçu désigné. La MIB est particulièrement utile car elle stocke systématiquement certains paramètres contenus dans l'entête des paquets des flux qui sont reçus par son équipement de réseau RPi ou RC. En outre, elle est directement accessible au système de gestion de réseau NMS.

Une fois que le module d'extraction ME est en possession du ou des paramètres (ou identifiants de paramètres) caractéristiques du flux désigné dans la demande d'obtention, il peut le(s) transmettre au module de traitement MT afin qu'il génère son message de configuration. En variante et lorsque le dispositif de gestion de localisation DG est ainsi agencé, le module d'extraction ME peut transmettre les paramètres (ou identifiants) extraits de l'équipement de réseau RPi ou RC à l'interface graphique GUI afin que l'administrateur puisse le(s) contrôler et/ou sélectionner l'un au moins d'entre eux avant de le communiquer au module de traitement MT (après une éventuelle sélection des routeurs périphériques RPi chargés de sa (ou leur) détection).

Une fois en possession du paramètre de configuration, représentatif (ou caractéristique) du flux à détecter, et des identifiants des routeurs périphériques RPi devant effectuer la détection (après une éventuelle sélection dans la mémoire MM), le module de traitement MT n'a plus qu'à générer son message de configuration puis à le faire transmettre par le système de gestion de réseau NMS auxdits routeurs.

Le dispositif de gestion de localisation DG peut également comprendre un module de collection MC couplé à son module de traitement MT, ainsi que de préférence à son interface graphique GUI (lorsqu'il en est équipé).

Ce module de collection MC est chargé, lorsqu'il reçoit un message d'alarme généré par le module de génération d'alarme MGMA d'un routeur périphérique RPi et comportant un identifiant d'interface d'entrée IE et un identifiant de paramètre de configuration, d'ordonner au module de traitement MT de générer un message requérant l'arrêt de la détection du flux caractérisé par ce paramètre de configuration.

Dans ce mode de réalisation, le module de traitement MT est donc également agencé de manière à générer un message d'arrêt à destination de l'équipement périphérique RPi qui vient de détecter un flux dont les paquets comportent dans leur entête le paramètre de configuration communiqué par le module de collection MC. Cela permet de désactiver le filtrage correspondant au niveau du routeur périphérique RPi concerné et donc d'éviter que son dispositif de détection DD ne transmette plusieurs fois un même message d'alarme pour signaler l'arrivée dans son routeur périphérique RPi d'un même flux déjà détecté.

Dans ce cas, le dispositif de détection DD, et plus précisément son module d'observation MO, est agencé de manière à désactiver le filtre comportant le paramètre de configuration désigné par un message d'arrêt reçu. Ainsi, une fois le filtre désactivé, le module d'observation MO cesse de comparer les entêtes de paquets au paramètre de configuration correspondant. Bien entendu, si d'autres filtres sont encore actifs, il poursuit ses détections avec ces derniers, jusqu'à ce qu'ils soient à leur tour désactivés. La désactivation d'un filtrage permet de libérer du temps de calcul CPU au niveau d'un équipement périphérique RPi et donc de consacrer ce CPU à d'autres tâches.

Lorsque le module de gestion de localisation MG est équipé d'une interface graphique GUI, le module de collection MC est avantageusement chargé de lui transmettre un message indiquant qu'il a reçu un message d'alarme signalant l'entrée dans le réseau N d'un flux comportant un paramètre de configuration (identifié par son identifiant), sur une interface d'entrée (identifiée par son identifiant) d'un routeur périphérique RPi (identifié par son identifiant). L'administrateur du réseau N sachant ainsi quel est le point d'entrée (ou interface d'entrée IE) du flux, il peut déclencher des actions appropriées à l'aide du système de gestion de réseau NMS.

Par ailleurs, il est avantageux que le dispositif de gestion de localisation DG comprenne une temporisation T couplée à son module de traitement MT. Cette temporisation T est chargée d'initier (ou lancer) le décompte d'une durée choisie chaque fois que le module de traitement MT reçoit une demande de génération d'un message d'arrêt de la part du module de collection MC. Lorsque le décompte est terminé, la temporisation T adresse au module de traitement MT un message (ou signal) l'autorisant à transmettre son message d'arrêt à destination de l'équipement périphérique concerné.

De plus, le dispositif de détection DD des équipements périphériques RPi peut éventuellement comporter une temporisation, préférentiellement configurable par le dispositif de gestion DG, afin de désactiver automatiquement un filtrage précédemment instauré lorsqu'une durée choisie est écoulée.

Le dispositif de détection DD selon l'invention, et notamment une partie au moins de son module d'observation et son module de génération de messages d'alarme MGMA, d'une part, et le dispositif de gestion de localisation DG, et notamment son module de traitement MT, son module d'extraction ME, sa temporisation T et son module de collection MC, d'autre part, peuvent être réalisés sous la forme de circuits électroniques, de modules logiciels (ou informatiques), ou d'une combinaison de circuits et de logiciels.

Grâce à l'invention, il est désormais possible d'identifier, rapidement et sans analyse manuelle de traces de flux, chaque point d'entrée d'un flux choisi dans un réseau, ce qui permet de déclencher beaucoup plus rapidement qu'auparavant des actions appropriées, et donc d'améliorer la sécurité du réseau en cas d'attaque et le respect de la constance de la qualité de service due aux clients du réseau.

L'invention ne se limite pas aux modes de réalisation de dispositif de détection, de dispositif de gestion de localisation et de procédé de gestion de localisation décrits ci-avant, seulement à titre d'exemple, mais elle englobe toutes les variantes que pourra envisager l'homme de l'art dans le cadre des revendications ci-après.

## Revendications

1. Dispositif de détection de flux de paquets de données (DD) pour un équipement périphérique (RP) d'un réseau de communications (N) muni d'un système de gestion de réseau (NMS), **caractérisé en ce qu'**il comprend des moyens de détection (MA) agencés pour comparer des paramètres, contenus dans des entêtes de paquets de flux parvenant sur des interfaces d'entrée (IE) dudit équipement périphérique (RP), associées respectivement à des identifiants d'interface, à au moins un paramètre de configuration reçu dudit système de gestion de réseau (NMS) et associé à un identifiant de paramètre, et, en cas d'identité entre un paramètre d'entête d'un paquet d'un flux reçu sur l'une desdites interfaces d'entrée (IE) et ledit paramètre de configuration, pour générer à destination dudit système de gestion de réseau (NMS) un message d'alarme comprenant l'identifiant de l'interface d'entrée (IE) ayant reçu ledit flux et ledit identifiant de paramètre.

2. Dispositif selon la revendication 1, **caractérisé en ce que** lesdits moyens de détection (MA) sont agencés pour cesser de comparer les entêtes de paquets à un paramètre de configuration choisi en cas de réception d'un message provenant dudit système de gestion de réseau (NMS) et requérant l'arrêt de cette comparaison.

3. Dispositif selon l'une des revendications 1 et 2, **caractérisé en ce que** ledit paramètre de configuration est choisi dans un groupe comprenant au moins des adresses source et destination, un identifiant de protocole et un identifiant DSCP.

4. Dispositif selon l'une des revendications 1 et 2, **caractérisé en ce qu'**il est installé dans un boîtier propre à être raccordé à un équipement périphérique de réseau (RP).

5. Equipement périphérique de réseau (RP) pour un réseau de communications (N) équipé d'un système de gestion de réseau (NMS), **caractérisé en ce qu'**il comprend un dispositif de détection (DD) selon l'une des revendications précédentes.

6. Equipement de réseau selon la revendication 5, **caractérisé en ce qu'**il est agencé sous la forme d'un routeur périphérique.

7. Dispositif de gestion de localisation (DG) pour un système de gestion de réseau (NMS) d'un réseau de communications (N) comprenant des équipements périphériques (RP), munis d'interfaces d'entrée (IE) propres à recevoir des flux de paquets de données et associées respectivement à des identifiants d'interface, **caractérisé en ce qu'**il comprend des moyens de traitement (MT) agencés pour générer, à destination de certains au moins desdits équipements périphériques (RP), des messages de configuration comprenant au moins un paramètre de configuration et des instructions requérant une transmission, en cas de détection, de l'identifiant de chaque interface d'entrée (IE) ayant reçu un flux comprenant un paquet comportant dans un entête un paramètre identique audit paramètre de configuration.

8. Dispositif selon la revendication 7, **caractérisé en ce qu'**il comprend une interface graphique (GUI) propre à permettre à un utilisateur de communiquer un paramètre de configuration auxdits moyens de traitement (MT) en vue de la génération d'un message de configuration comportant ledit paramètre de configuration.

9. Dispositif selon l'une des revendications 7 et 8, **caractérisé en ce qu'**il comprend des moyens d'extraction (ME) propres, en cas de réception d'une demande d'obtention d'un paramètre de configuration représentatif d'un flux reçu par un équipement périphérique (RP) désigné par un identifiant, pour accéder à une base d'informations de gestion (MIB) dudit équipement périphérique désigné (RP), stockant des paramètres contenus dans les entêtes des paquets des flux reçus, de manière à extraire l'un au moins desdits paramètres dudit flux reçu puis à le transmettre auxdits moyens de traitement (MT) en vue de la génération d'un message de configuration comportant ledit paramètre extrait comme paramètre de configuration.

10. Dispositif selon l'une des revendications 7 à 9, **caractérisé en ce que** ledit système de gestion de réseau (NMS) comprenant une mémoire (MM) stockant des identifiants d'équipements périphériques (RP) permettant l'accès des flux audit réseau (N), lesdits moyens de traitement (MT) sont agencés, à réception d'un paramètre de configuration représentatif d'un flux choisi, pour accéder à ladite mémoire (MM) de manière à déterminer les identifiants des équipements périphériques (RP) auxquels doivent être transmis les messages de configuration contenant ledit paramètre de configuration reçu, puis transmettre ledit message de configuration à chaque équipement périphérique (RP) dont l'identifiant a été déterminé.

11. Dispositif selon l'une des revendications 8 et 9, **caractérisé en ce que** ladite interface graphique (GUI) est propre à permettre à un utilisateur de sélectionner parmi une liste d'équipements périphériques (RP) chaque équipement périphérique devant effectuer une détection, puis à communiquer chaque identifiant d'équipement périphérique sélectionné auxdits moyens de traitement (MT) en vue de la génération d'un message de configuration comportant ledit paramètre de configuration.

12. Dispositif selon la revendication 11, **caractérisé en ce que** ladite interface graphique (GUI) est couplée à une mémoire (MM) dudit système de gestion de réseau (NMS) stockant lesdits identifiants d'équipements périphériques (RP) permettant l'accès des flux audit réseau (N).

13. Dispositif selon l'une des revendications 7 à 12, **caractérisé en ce qu'**il comprend des moyens de collection (MC) propres, en cas de réception d'un message d'alarme provenant d'un équipement périphérique (RP) et comportant un identifiant d'interface d'entrée (IE) et un identifiant de paramètre de configuration, à ordonner auxdits moyens de traitement (MT) de générer à destination dudit équipement périphérique (RP) un message requérant l'arrêt de la détection des flux comportant ledit paramètre de configuration reçu.

14. Dispositif selon la revendication 13, **caractérisé en ce qu'**il comprend des moyens de temporisation (T) agencés, en cas de réception par lesdits moyens de traitement (MT) d'une demande de génération d'un message d'arrêt, pour initier un décompte d'une durée choisie, puis en fin de décompte pour autoriser lesdits moyens de traitement (MT) à transmettre ledit message d'arrêt à destination dudit équipement périphérique (RP) concerné.

15. Dispositif selon l'une des revendications 7 à 14, **caractérisé en ce que** ledit paramètre de configuration est choisi dans un groupe comprenant au moins des adresses source et destination, un identifiant de protocole et un identifiant DSCP.

16. Procédé de gestion de localisation pour un réseau de communications (N) comprenant des équipements périphériques (RP), munis d'interfaces d'entrée (lE) propres à recevoir des flux de paquets de données et associées respectivement à des identifiants d'interface, **caractérisé en ce qu'**il consiste :
- à déterminer au moins un paramètre de configuration représentatif d'un flux à détecter et associé à un identifiant de paramètre,
- à configurer des équipements périphériques (RP) choisis dudit réseau (N) de sorte qu'ils comparent des paramètres, contenus dans des entêtes de paquets de flux parvenant sur leurs interfaces d'entrée (IE), audit paramètre de configuration, et qu'en cas d'identité entre un paramètre d'entête d'un paquet d'un flux reçu sur l'une de leurs interfaces d'entrée (IE) et ledit paramètre de configuration, ils génèrent à destination d'un système de gestion dudit réseau (NMS) un message d'alarme, comprenant l'identifiant de l'interface d'entrée (IE) ayant reçu ledit flux et ledit identifiant de paramètre, et
- en cas de réception d'un message d'alarme provenant d'un équipement périphérique (RP) et comportant un identifiant d'interface d'entrée (IE) et un identifiant de paramètre de configuration, à transmettre aux équipements périphériques (RP) concernés un message requérant l'arrêt de la détection des flux comportant ledit paramètre de configuration.
